# EUROPEAN PATENT SPECIFICATION

(11) **EP 2 141 703 B1**
(45) Date of publication and mention of the grant of the patent: **04.09.2013**
(21) Application number: 09164582.0
(22) Date of filing: 03.07.2009
(51) Int. Cl.: G11B 27/00, G11B 27/10, G11B 27/22, G11B 20/18, G11B 20/12

(54) **Methods and apparatus for copying data**
Verfahren und Vorrichtung zum Kopieren von Daten
Méthodes et appareil de copie de données

(30) Priority: 04.07.2008 KR 20080065142; 29.06.2009 US 458012
(43) Date of publication of application: 06.01.2010
(73) Proprietor: Samsung Electronics Co., Ltd., Suwon-si, Gyeonggi-do, 443-742 (KR)
(72) Inventor: Hur, Sung-chul, Gyeonggi-do (KR); Park, No-yeol, Seongnam-si Gyeonggi-do (KR); Kim, Jin-seak, Suwon-si Gyeonggi-do (KR); Hong, Min-pyo, Suwon-si Gyeonggi-do (KR); Yu, Seong-hwan, Suwon-si Gyeonggi-do (KR); Jang, Jun-ho, Suwon-si Gyeonggi-do (KR)
(74) Representative: Grünecker, Kinkeldey, Stockmair & Schwanhäusser

(56) References cited:
- EP-A- 0 724 363
- EP-A- 1 132 914
- EP-A- 1 164 590
- EP-A- 1 798 726
- EP-A- 2 000 897
- WO-A-00/79537
- WO-A-02/091379
- WO-A-03/063496
- US-A1- 2002 144 186
- US-A1- 2003 026 343

## Description

### PRIORITY STATEMENT

The subject application claims priority under 35 U.S.C. 119 on Korean application no. 10-2008-0065142 filed July 4, 2008;

### BACKGROUND OF THE INVENTION

The present invention relates to copying data or files, and in particular, audio and/or video data or files.

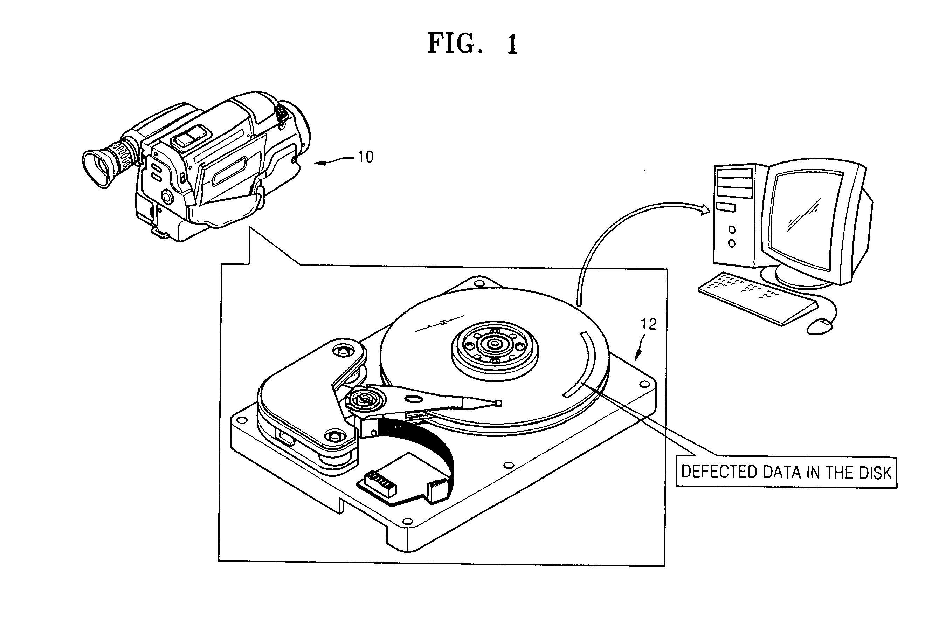

As shown in Fig. 1, audio and/or video data (audio/video data) may be recorded using, for example, a camcorder 10. The audio/video data recorded by the camcorder 10 may be stored on a storage device such as a hard disk drive 12 in the camcorder 10. Often the audio/video data is recorded in one or more files on the hard disk drive 12. At some point, the user of the camcorder 10 may want to copy the audio/video data or files on the hard disk drive 12 to a different storage device such as one associated with a personal computer 14.

During the copy operation, the hard disk drive 12 may encounter defective data. For example, the hard disk drive 12 may encounter data that can not be corrected by known error correction techniques. In this event, the copy operation fails. Even though only a portion of the audio/video data or file being copied is defective, the entire copy operation fails and none of the audio/video to-be-copied is copied.

### SUMMARY OF THE INVENTION

Embodiments of the present invention are directed to methods and/or apparatuses for copying data.

In one embodiment, the method includes modifying data being copied such that portions of the data that include defects are replaced with dummy data. For example, a defective portion of the data is detected during a copy operation, and the data being copied is modified such that detected defective portions of the data are replaced with the dummy data.

The data may be copied from a first storage device to a second storage device. The first and second storage devices may be in the same or different devices (e.g., audio/video devices). The defect detection may be performed at the audio/video device including the first storage device or the second storage device.

In one embodiment, a user is notified of a defect and instructs whether the copy operation is to continue by performing the modification or not.

In one embodiment, the apparatus for copying includes a storage device configured to store data and a processor configured to modify data being copied from the storage device such that portions of the data that include defects are replaced with dummy data.

In another embodiment, the apparatus includes a storage device configured to store data and a processor configured to modify data being copied such that portions of the data that include defects are replaced with dummy data before being stored in the storage device.

### BRIEF DESCRIPTION OF THE DRAWINGS

The present invention will become more fully understood from the detailed description given herein below and the accompanying drawings, wherein like elements are represented by like reference numerals, which are given by way of illustration only and thus are not limiting of the present invention and wherein:

Fig. 1 illustrates a conventional arrangement of devices for copying audio/video data from one device to another.

Fig. 2 illustrates an example device architecture for describing embodiments of the present invention.

Fig. 3 illustrates the first and second audio/video devices of Fig. 2 in greater detail.

Figs. 4-9 each illustrate an embodiment of a method of copying data.

### DETAILED DESCRIPTION OF THE EMBODIMENTS

Illustrative embodiments are described below. In the interest of clarity, not all features of an actual implementation may be described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

In the following description, for purposes of explanation and not limitation, specific details are set forth such as particular architectures, interfaces, techniques, etc., in order to provide a thorough understanding of the present invention. However, it will be apparent to those skilled in the art that the present invention may be practiced in other illustrative embodiments that depart from these specific details. In some instances, detailed descriptions of well-known devices, circuits, and methods are omitted so as not to obscure the description of the present invention with unnecessary detail. All principles, aspects, and embodiments of the present invention, as well as specific examples thereof, are intended to encompass both structural and functional equivalents thereof. Additionally, it is intended that such equivalents include both currently known equivalents as well as equivalents developed in the future.

Exemplary embodiments are discussed herein as being implemented in suitable computing/device environments. Although not required, exemplary embodiments will be described in the general context of computer-executable instructions, such as program modules or functional processes, being executed by one or more computer processors or CPUs. Generally, program modules or functional processes include routines, programs, objects, components, data structures, etc. that performs particular tasks or implement particular abstract data types. The program modules and functional processes discussed herein may be implemented using existing hardware/devices. For example, program modules and functional processes discussed herein may be implemented using existing hardware/devices.

Portions of the embodiments and corresponding detailed description may be presented in terms of software, or algorithms and symbolic representations of operations on data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Note also that the software implemented aspects of the invention are typically encoded on some form of physical computer readable medium. The computer readable medium may be magnetic (e.g., a floppy disk or a hard drive), optical (e.g., a compact disk read only memory, or "CD ROM"), solid state (e.g., flash memory) and may be read only or random access.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments of the present invention. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between", "adjacent" versus "directly adjacent", etc.).

The terminology used herein is for the purpose of describing particular embodiments only and is not intended to be limiting of example embodiments of the invention. As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

The embodiments will now be described with reference to the attached figures. Various structures, systems and devices are schematically depicted in the drawings for purposes of explanation only and so as to not obscure the present invention with details that are well known to those skilled in the art. Nevertheless, the attached drawings are included to describe and explain illustrative examples. Where applicable, the words and phrases used herein should be understood and interpreted to have a meaning consistent with the understanding of those words and phrases by those skilled in the relevant art.

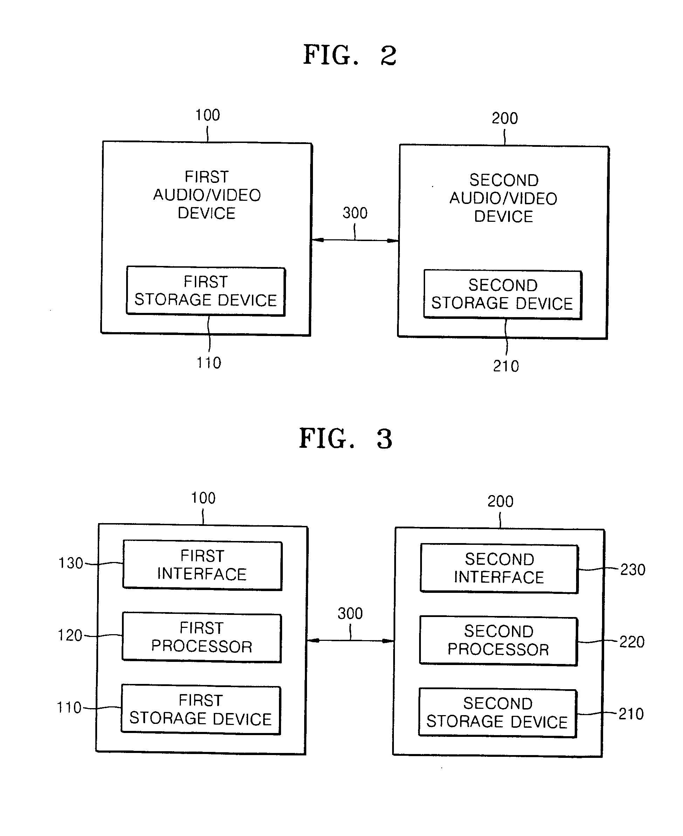

Fig. 2 illustrates an example device architecture for describing embodiments of the present invention. As shown, a first audio/video device 100 having a first storage device 110 is connected via a connection 300 to a second audio/video device 200 having a second storage device 210. The first audio/video device 100 may be any type of electronic device that stores audio data and/or video data on the first storage device 110. For example, the first audio/video device 100 may be an audio and/or video capture device such as a camcorder, digital camera, etc. Here, the first storage device 110 may be a hard disk drive, optical disk, flash memory, magnetic tape, etc. The first audio/video device 100 may be a set top box such as a digital video recorder. Here the first storage device 110 may be a hard disk drive, optical disk, flash memory, magnetic tape, etc. The first audio/video device 100 may also be a storage device; namely, the first audio/video device 100 is the first storage device 110. For example, the first audio/video device 100 may be hard disk drive, flash memory, etc. The first audio/video device 100 may also be other types of electronic devices having storage capabilities such as a personal data assistant (PDA), a cell or portable phone, MP3 player, personal computer, etc. Here, the first audio/video device 100 may be hard disk drive, flash memory, etc.

The second audio/video device 200 may be any of the electronic devices discussed above with respect to the first audio/video device 100. However, it will be appreciated that second audio/video device 200 actually connected to the first audio/video device 100 may be the same device as the first audio/video device 100 or a different device. For example, in one embodiment, both the first and second audio/video devices 100 and 200 may be personal computers. In another embodiment, the first audio/video device 100 may be camcorder and the second audio/video device 200 may be a personal computer. Likewise, the second storage device 210 may be any of the storage devices described above with respect to the first storage device 110. Also, it will be appreciated that the actual second storage device 210 may be the same storage device as the first storage device 110 or a different storage device.

The first and second audio/video devices 100 and 200 may be connected in any well-known manner. For example, the connection 300 may be a direct wired connection such as over a cable, a direct wireless connection such as Bluetooth, an indirect connection such as over a network (e.g., the Internet), an indirect connection such as a wireless connection via a wireless network, etc.

Fig. 3 illustrates the first and second audio/video devices of Fig. 2 in greater detail. In particular, Fig. 3 shows that the first audio/video device 100 generally includes a first processor 120. The first processor 120 executes operational methodologies of the first audio/video device 100 in accordance with programming stored in the first audio/video device 100. This programming may be stored in the first storage device 110 or another storage device (not shown) of the first audio/video device 100. For example, the first processor 120 may execute a data or file copy method according an embodiment of the present invention described in detail below.

The first audio/video device 100 may include a first interface 130 for interfacing the first audio/video device 100 with other electronic devices such as the second audio/video device 200. As will be appreciated, the first audio/video device 100 may also include numerous other components associated with functionality of the first audio/video device 100. For example, if the first audio/video device 100 is a camcorder, then the first audio/video device 100 may also include an imaging device, a presentation device (e.g., a display), user inputs, etc., and the processor 120 may control operation of these elements based on the received user input and programming. However, since these elements are not directly involved in the data or file copy method according to embodiments of the present invention described in detail below, these elements have not been shown for the sake of clarity.

As with the first audio/video device 100, the second audio/video device 200 may include a second processor 220. The second processor 220 executes operational methodologies of the second audio/video device 200 in accordance with programming stored in the second audio/video device 200. This programming may be stored in the first storage device 210 or another storage device (not shown) of the second audio/video device 200. For example, the second processor 220 may execute a portion of the data or file copy method according an embodiment of the present invention described in detail below.

The second audio/video device 200 may include a second interface 230 for interfacing the second audio/video device 200 with other electronic devices such as the first audio/video device 100. As will be appreciated, the second audio/video device 200 may also include numerous other components associated with functionality of the first audio/video device 200. For example, if the second audio/video device 200 is a personal computer, then the second audio/video device 200 may also include an various chip sets, disk drives, a presentation device (e.g., a display), user inputs (e.g., mouse, keyboard, etc.), etc., and the processor 220 may control operation of these elements based on the received user input and programming. However, since these elements are not directly involved in the data or file copy method according to embodiments of the present invention described in detail below, these elements have not been shown for the sake of clarity.

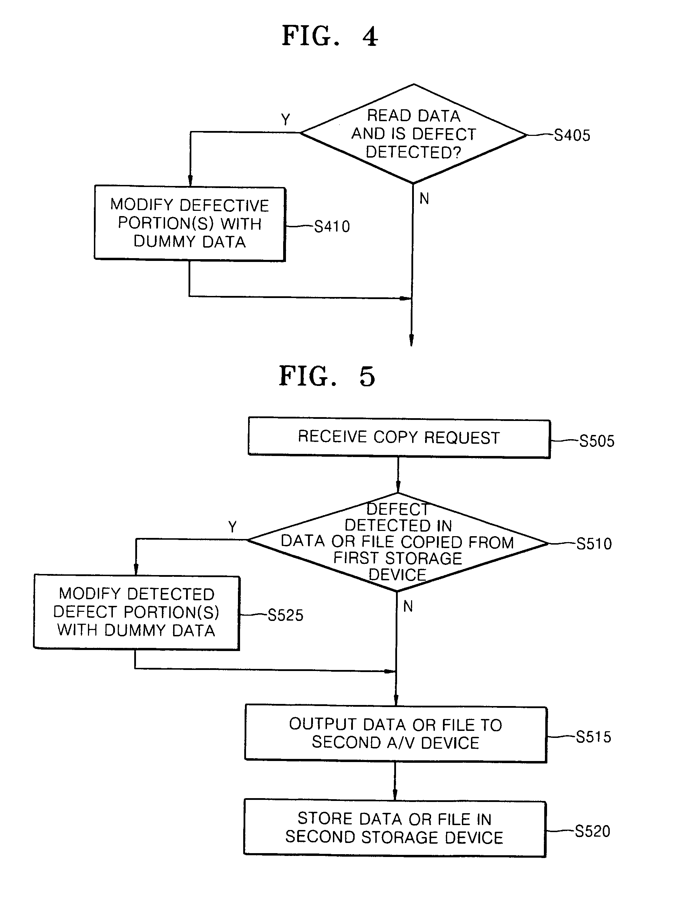

Fig. 4 illustrates an embodiment of a method of copying data. The embodiment of Fig. 4 may be implemented at either the first or second audio/video device 100/200 or distributed between the first and second audio/video devices 100 and 200. These variations will be described in greater detail below with respect to further embodiments of the method. For the purposes of explanation only, the embodiment of Fig. 4 will be described as being implemented at the first audio/video device 100.

In response to a request to copy data stored in the first storage device 110, in step S405 the processor 120 reads the data to-be-copied from the first storage device 110 and detects whether a defect exists in a portion of the data being copied. If a defect is detected, then in step S410, the processor 120 modifies the defective portion of the data by replacing the defective portion with dummy data. For example, the dummy data may be all 0s, all 1s, a desired pattern of 1s and 0s, etc. If no defect is detected the copy operation proceeds in a conventional fashion. The request to copy data may be a request to copy a file, in which case the data constituting the file is read, and if a defective portion of the file is detected in step S405, the processor 120 modifies the defective portion (or portions) of the file with dummy data in step S410. In this manner, even though a defect exists in data being copied, the copy operation may continue and complete.

Fig. 5 illustrates another embodiment of a method of copying data. In this embodiment, the first processor 120 receives a request to copy data or copy a file. The request may be received via the first interface 110 from the second audio/video device 200. For example, as shown in Fig. 3, the first and second audio/video devices 100 and 200 may be connected. A user of the second audio/video device 200 may input a request to copy data or a file from the first audio/video device 100. The second processor 220 sends the request via the second interface 230, the connection 300, and the first interface 130 to the first processor 120.

In response the first processor 120 reads the requested data from the first storage device 120 and determines if defective portions exist in the data to-be-copied in step S510. If no defect exists, the data or file is output to the second audio/video device in step S515. For example, the data or file is output via the first interface 130, and transferred over the connection 300 to the second audio/video device 200. In step S520, the transferred data or file is received by the second interface 230, and the processor 220 stores the transferred data or file in the second storage device 210. As will be appreciated this reading, detection and transfer of the data or file may take place in increments (e.g., 4KB).

If, in step S510, the first processor 120 determines a defect exists, then in step S525, the first processor 120 modifies the defective portion by substituting dummy data for the defective portion. For example, the dummy data may be all 0s, all 1s, a desired pattern of 1s and 0s, etc. Next, the modified portion of the data or file (i.e., the dummy data) is transferred to the second audio/video device 200 in step S515 and stored in the second storage device 210 in step S520. In this manner, even though a defect exists in data being copied, the copy operation may continue and complete.

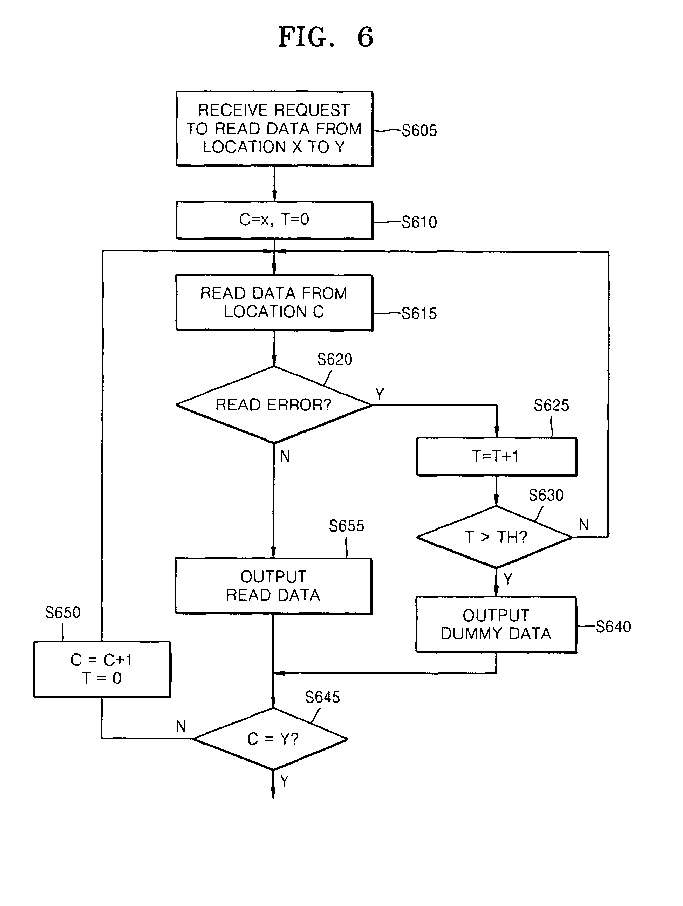

Fig. 6 illustrates a more detailed embodiment of a method of copying. In this embodiment, the first processor 120, for example, receives a request to copy data or copy a file stored in the first storage device 110 in step S605. In this example, the data or file is stored from location X to location Y of the first storage device 110. It will be appreciated that the locations may be logical addresses, physical addresses, etc. For example, the data or file may be distributed amongst different physical locations of the first storage device 110. Still further, even if distribute physically, the data or file may have consecutive logical addresses. The request may be received via the first interface 130 from the second audio/video device 200. For example, as shown in Fig. 3, the first and second audio/video devices 100 and 200 may be connected. A user of the second audio/video device 200 may input a request to copy data or a file from the first audio/video device 100. The second processor 220 sends the request via the second interface 230, the connection 300, and the first interface 130 to the first processor 120.

The first processor 120 sets a location counter C to location X, and a read trial counter T to 0 in step S610, and reads the requested data from the location in the first storage device 120 indicated by the location counter C in step S615. In step S620, the first processor 120 determines if a read error occurs. A read error may exist if the data is defective, etc. If a read error occurs, then in step S625 the first processor 120 increments the read trial counter T and in step S630 the first processor 120 determines if the read trial counter T exceeds a threshold TH. The threshold TH may be empirically determined and set as a matter of design choice. For example, in one embodiment, the threshold TH is set to 100. If the read trial counter T exceeds the threshold TH, then the first processor 120 determines that the data in location C is defective. As a result, the first processor 120 outputs dummy data as the data from location C. For example, the dummy data may be all 0s, all 1s, a desired pattern of 1s and 0s, etc. While not shown in Fig. 6, the first processor 120 may also replace the location C with a new location in the first storage device 110, and store the dummy data in the new location.

As a further alternative, in steps S640, the first processor 120 may replace the location C with a new location in the first storage device 110, store the dummy data in the new location, read the dummy data from the new location, and output the read dummy data to the second audio/video device 200. At the second audio/video device 200, the received data is stored in the second storage device 210.

Returning to step S630, if the read trial counter T does not exceed the threshold TH, then processing returns to step S615 where the first processor 120 attempts to read the data at location C again.

Returning to step S620, if no read error exits, then in step S655, the first processor 120 outputs the read data. At the second audio/video device 200, the received read data is stored in the second storage device 210. After steps S655 and S640, the first processor 120 determines if the location counter C equals the last location Y. If so, the copy operation ends. If not, then in step S650, the location counter C is incremented and the read trial counter T is reset to zero.

As will be appreciated, in the above embodiment, defects in data or a file are detected on a portion-by-portion basis. Defective portions are replaced or modified to dummy data and the copy operation is thus allowed to continue and complete.

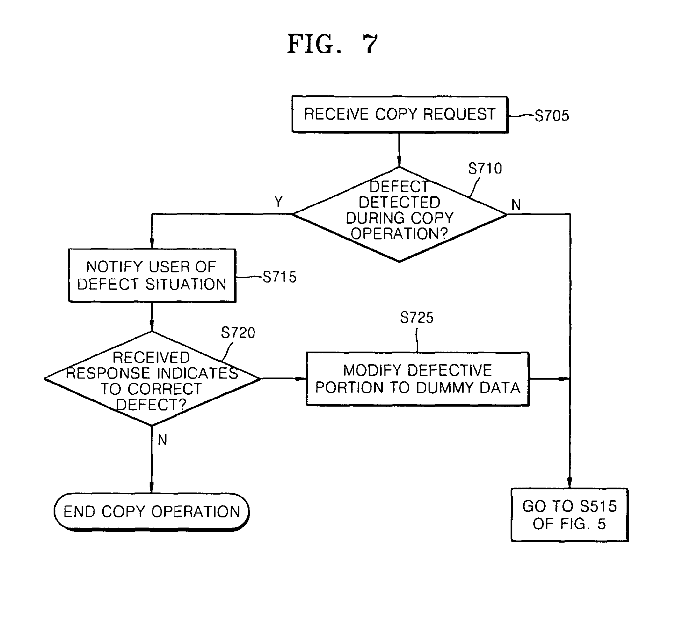

Fig. 7 illustrates another embodiment of a method of copying data. In this embodiment, the first processor 120 receives a request to copy data or copy a file in step S705. The request may be received via the first interface 110 from the second audio/video device 200. For example, as shown in Fig. 3, the first and second audio/video devices 100 and 200 may be connected. A user of the second audio/video device 200 may input a request to copy data or a file from the first audio/video device 100. The second processor 220 sends the request via the second interface 230, the connection 300, and the first interface 130 to the first processor 120.

In response the first processor 120 reads the requested data from the first storage device 120 and determines if defective portions exist in the data to-be-copied in step S710. If no defect exists, processing proceeds to step S515 of Fig. 5 where the data or file is output to the second audio/video device. For example, the data or file is output via the first interface 130, and transferred over the connection 300 to the second audio/video device 200. Then, in step S520, the transferred data or file is received by the second interface 230, and the processor 220 stores the transferred data or file in the second storage device 210. As will be appreciated this reading, detection and transfer of the data or file may take place in increments (e.g., 4KB).

If, in step S710 of Fig. 7, the first processor 120 determines a defect exists, then in step S715, the first processor 120 notifies the second audio/video device 200 that a defect exists, and inquires whether the second audio/video device 200 wants to correct the defect and continue the copy operation. For example, this notification and inquiry may be sent via the first interface 130, the connection 300 and the second interface 230 to the second processor 220. The second processor 220 may then provide the notification and inquiry to a user of the second audio/video device 200. For example, if the second audio/video device 200 is a personal computer, the second processor 220 may display the notification and inquiry on a display screen. The second processor 220 may also receive a user's response, and send that response to the first processor 120 via the second interface 230, the connection 300 and the first interface 130.

In step S720, the first processor 120 determines if the received response indicates to correct the defective data and continue the copy operation. If so, then in step S725, the first processor 120 modifies the defective portion by substituting dummy data for the defective portion. For example, the dummy data may be all 0s, all 1s, a desired pattern of 1s and 0s, etc. Next, the modified portion of the data or file (i.e., the dummy data) is transferred to the second audio/video device 200 in step S515 and stored in the second storage device 210 in step S520. In this manner, even though a defect exists in data being copied, the copy operation may continue and complete.

If in step S720, the received response does not indicate to correct the defective data and continue the copy operation, then the copy operation ends. In this manner, a user requesting the copy operation may control whether to continue and complete the copy operation when defective data exists.

In the above described embodiments, instead of copying the data from the first storage device 110 to the second storage device 210, the embodiments may also be applied to copying the data from one part of the first storage device 110 to another part of the first storage device 110. Alternatively, the first audio/video device 100 may include more than one storage device, and the embodiments may be applied to copying data from one storage device of the first audio/video device 100 to another storage device of the first audio/video storage device 100.

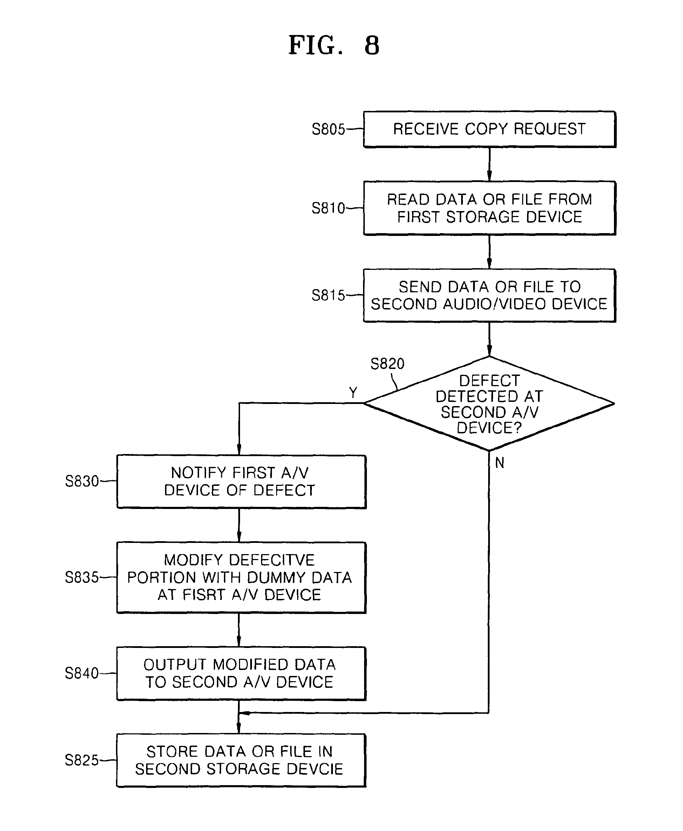

Fig. 8 illustrates another embodiment of a method of copying data. In this embodiment, the first processor 120 receives a request to copy data or copy a file in step S805. The request may be received via the first interface 130 from the second audio/video device 200. For example, as shown in Fig. 3, the first and second audio/video devices 100 and 200 may be connected. A user of the second audio/video device 200 may input a request to copy data or a file from the first audio/video device 100. The second processor 220 sends the request via the second interface 230, the connection 300, and the first interface 130 to the first processor 120.

In response to the request, the first processor 120 reads the requested data from the first storage device 120 in step S810, and sends the read data or file to the second audio/video device 200 in step S815. For example, the data or file is output via the first interface 130, and transferred over the connection 300 to the second audio/video device 200.

In step S820, the second processor 120 determines if defective portions exist in the data. If no defect exists, the second interface the processor 220 stores the transferred data or file in the second storage device 210 in step S825. As will be appreciated this reading, detection and transfer of the data or file may take place in increments (e.g., 4KB).

If, in step S820, the second processor 220 determines a defect exists, then in step S835, the second processor 120 notifies the first audio/video device 100 that a defect exists. For example, this notification may be sent via the second interface 230, the connection 300 and the first interface 130 to the first processor 120. The first processor 120 then corrects the defective data. Namely, the first processor 120 modifies the defective portion by substituting dummy data for the defective portion. For example, the dummy data may be all 0s, all 1s, a desired pattern of 1s and 0s, etc. Next, the modified portion of the data or file (i.e., the dummy data) is transferred to the second audio/video device 200 in step S840 and the modified data is stored in the second storage device 210 in step S825. In this manner, even though a defect exists in data being copied, the copy operation may continue and complete.

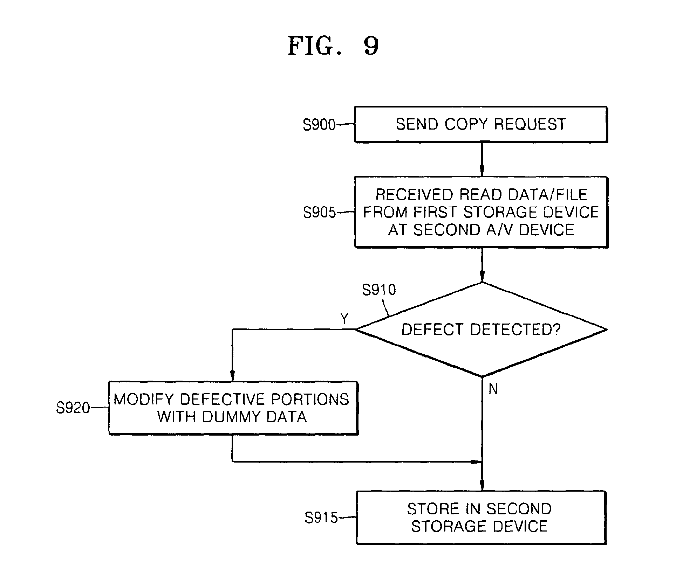

Fig. 9 illustrates another embodiment of a method of copying data. In this embodiment, the second processor 220 sends a request to copy data or copy a file to the first audio/video device 100. In response the second processor 220 receives data read from the first storage device 120 in step S905, and determines if defective portions exist in the data in step S910. If no defect exists, the data or file is stored in the second storage device 210 in step S915. As will be appreciated this reading, detection and storing of the data or file may take place in increments (e.g., 4KB).

If, in step S910, the second processor 220 determines a defect exists, then in step S920, the second processor 220 modifies the defective portion by substituting dummy data for the defective portion. For example, the dummy data may be all 0s, all 1s, a desired pattern of 1s and 0s, etc. Next, the modified portion of the data or file (i.e., the dummy data) is stored in the second storage device 210 in step S915. In this manner, even though a defect exists in data being copied, the copy operation may continue and complete.

The invention being thus described, it will be obvious that the same may be varied in many ways. Such variations are not to be regarded as a departure from the invention, and all such modifications are intended to be included within the scope of the invention.

## Claims

1. A method of copying data, comprising:
by a first processor (120), receiving from a second processor (220) a request input by a user to copy data stored in a first storage device (110) to a second storage device (210);
by the first processor, reading the data from the first storage device and determining if defective portions exist;
if the first processor determines that no defective portions causing a reading error exist, transferring the data to the second storage device and, by the second processor, storing the data in the second storage device;
if the first processor determines that a defective portion causing a reading error exists, the first processor notifies the second processor that a defective portion exists and inquires whether the defective portion should be modified;
sending, by the second processor a user's response to the inquiry to the first processor;
determining, by the first processor, if the response indicates to modify the defective portion, and if so, the first processor modifies the defective portion by substituting dummy data for the defective portion and transfers the modified portion to the second processor that stores the modified portion in the second storage device, and if not so, ending the copy operation;
wherein the dummy data is a fixed bit pattern; and
wherein the first storage device is a hard disk drive, an optical disk, a flash memory or a magnetic tape and wherein the second storage device is a hard disk drive, an optical disk, a flash memory or a magnetic tape.

2. The method of claim 1, wherein the data is comprised in a data file.

3. A system, comprising:
a first storage device (110) and a second storage device (210);
a first processor (120) and a second processor (220);
the first processor being configured to receive from the second processor a request input by a user to copy data stored in the first storage device to the second storage device, and to read the data from the first storage device and to determine if defective portions exist;
the first processor being further configured to transfer the data to the second storage device, if it is determined that no defective portions causing a reading error exist, and the second processor being configured to store the transferred data in the second storage device;
the first processor being further configured to notify the second processor that a defective portion causing a reading error exists and inquires whether the defective portion should be if it is determined that a defective portion exists;
the second processor being further configured to send a user's response to the inquiry to the first processor;
the first processor being configured to determine if the response indicates to modify the defective portion, and if so, to modify the defective portion by substituting dummy data for the defective portion and to transfer the modified portion to the second processor for storing the modified portion in the second storage device, and if not so, to end the copy operation;
wherein the dummy data is a fixed bit pattern; and
wherein the first storage device is a hard disk drive, an optical disk, a flash memory or a magnetic tape and wherein the second storage device is a hard disk drive, an optical disk, a flash memory or a magnetic tape.

4. The system of claim 3, wherein the first storage device is comprised in a first audio/video device and the second storage device is comprised in a second audio/video device.

## Patentansprüche

1. Datenkopierverfahren, umfassend:
Empfangen durch einen ersten Prozessor (120) von einem zweiten Prozessor (220) einer Anforderung, die von einem Benutzer eingegeben wird, Daten, die in einer ersten Speichervorrichtung (110) gespeichert sind, zu einer zweiten Speichervorrichtung (210) zu kopieren;
Lesen der Daten von der Speichervorrichtung und Bestimmen, ob fehlerhafte Teile vorhanden sind, durch den ersten Prozessor;
sofern der erste Prozessor bestimmt, dass keine fehlerhaften Teile vorhanden sind, die einen Lesefehler verursachen, Übertragen der Daten zu der zweiten Speichervorrichtung und Speichern der Daten in der zweiten Speichervorrichtung durch den zweiten Prozessor;
sofern der erste Prozessor bestimmt, dass ein fehlerhafter Teil existiert, der einen Lesefehler verursacht, Informieren des zweiten Prozessors durch den ersten Prozessor, dass ein fehlerhafter Teil vorhanden ist und Anfragen, ob der fehlerhafte Teil abgeändert werden soll;
Senden einer Benutzerantwort auf die Anfrage von dem zweiten Prozessor zu dem ersten Prozessor;
Bestimmen durch den ersten Prozessor, ob die Antwort angibt, den fehlerhaften Teil abzuändern, und wenn dies so ist, Abändern des fehlerhaften Teils durch Einsetzen von Dummy-Daten für den fehlerhaften Teil, Senden des abgeänderten Teils zu dem zweiten Prozessor, der den abgeänderten Teil in der zweiten Speichervorrichtung speichert, und wenn dies nicht so ist, Beenden des Kopiervorgangs durch den ersten Prozessor;
wobei die Dummy-Daten ein festgelegtes Bitmuster sind und
die erste Speichervorrichtung ein Festplattenlaufwerk, eine optische Platte, ein Flash-Speicher oder ein Magnetband ist und die zweite Speichervorrichtung ein Festplattenlaufwerk, eine optische Platte, ein Flash-Speicher oder ein Magnetband ist.

2. Verfahren nach Anspruch 1, bei dem die Daten in einer Datendatei enthalten sind.

3. System, umfassend:
eine erste Speichervorrichtung (110) und eine zweite Speichervorrichtung (210);
einen ersten Prozessor (120) und einen zweiten Prozessor (220);
wobei der erste Prozessor dazu eingerichtet ist, von dem zweiten Prozessor eine Anforderung zu empfangen, die von einem Benutzer eingegeben wird, Daten, die in der ersten Speichervorrichtung gespeichert sind, zu der zweiten Speichervorrichtung zu kopieren, und die Daten aus der ersten Speichervorrichtung zu lesen und zu bestimmen, ob fehlerhafte Teile vorhanden sind;
der erste Prozessor weiterhin dazu eingerichtet ist, die Daten zu der zweiten Speichervorrichtung zu übertragen, sofern bestimmt wird, dass keine fehlerhaften Teile vorhanden sind, die einen Lesefehler verursachen, und der zweite Prozessor dazu eingerichtet ist, die übertragenen Daten in der zweiten Speichervorrichtung zu speichern;
der erste Prozessor weiterhin dazu eingerichtet ist, den zweiten Prozessor zu informieren, dass ein fehlerhafter Teil vorhanden ist, der einen Lesefehler verursacht, und anfragt, ob der fehlerhafte Teil abgeändert werden sollte, wenn bestimmt wird, dass ein fehlerhafte Teil vorhanden ist;
der zweite Prozessor weiterhin dazu eingerichtet ist, eine Benutzerantwort auf die Anfrage des ersten Prozessors zu senden; und
der erste Prozessor dazu eingerichtet ist zu bestimmen, ob die Antwort angibt, den fehlerhaften Teil abzuändern, und wenn dies der Fall ist, den fehlerhaften Teil abzuändern, indem er Dummy-Daten für den fehlerhaften Teil einfügt, und den abgeänderten Teil zu dem zweiten Prozessor zu senden, um den abgeänderten Teil in der zweiten Speichervorrichtung zu speichern, und wenn dies nicht der Fall ist, den Kopiervorgang zu beenden;
wobei die Dummy-Daten ein festgelegtes Datenmuster sind und
die erste Speichervorrichtung ein Festplattenlaufwerk, eine optische Platte, ein Flash-Speicher oder ein Magnetband ist und die zweite Speichervorrichtung ein Festplattenlaufwerk, eine optische Platte, ein Flash-Speicher oder ein Magnetband ist.

4. System nach Anspruch 3, bei dem die erste Speichervorrichtung in einer ersten Audio-/Videovorrichtung und die zweite Speichervorrichtung in einer zweiten Audio-/Videovorrichtung enthalten ist.

## Revendications

1. Procédé de copie de données, comprenant :
par un premier processeur (120), la réception depuis un deuxième processeur (220) d'une entrée de demande par un utilisateur pour copier des données stockées dans un premier dispositif de stockage (110) vers un deuxième dispositif de stockage (210) ;
par le premier processeur, la lecture des données présentes sur le premier dispositif de stockage et la détermination du fait qu'il existe ou non des parties défectueuses ;
si le premier processeur détermine qu'il n'existe pas de parties défectueuses provoquant une erreur de lecture, le transfert des données vers le deuxième dispositif de stockage et, par le deuxième processeur, le stockage des données dans le deuxième dispositif de stockage ;
si le premier processeur détermine qu'il existe une partie défectueuse provoquant une erreur de lecture, le premier processeur notifie le deuxième processeur qu'il existe une partie défectueuse et demande si la partie défectueuse doit ou non être modifiée ;
l'envoi, par le deuxième processeur, d'une réponse d'utilisateur à la demande au premier processeur ;
la détermination, par le premier processeur, du fait que la réponse indique ou non de modifier la partie défectueuse, et si c'est le cas, le premier processeur modifie la partie défectueuse en substituant la partie défectueuse par des données factices et transfère la partie modifiée au deuxième processeur, qui stocke la partie modifiée dans le deuxième dispositif de stockage, et si ce n'est pas le cas, la finalisation de l'opération de copie ;
dans lequel les données factices constituent un motif binaire fixé ; et
dans lequel le premier dispositif de stockage est un disque dur, un disque optique, une mémoire flash ou une bande magnétique, et dans lequel le deuxième dispositif de stockage est un disque dur, un disque optique, une mémoire flash ou une bande magnétique.

2. Procédé selon la revendication 1, dans lequel les données sont comprises dans un fichier de données.

3. Système comprenant :
un premier dispositif de stockage (110) et un deuxième dispositif de stockage (210) ;
un premier processeur (120) et un deuxième processeur (220) ;
le premier processeur étant configuré pour recevoir du deuxième processeur une entrée de demande par un utilisateur pour copier des données stockées dans le premier dispositif de stockage vers le deuxième dispositif de stockage, et pour lire les données présentes sur le premier dispositif de stockage et déterminer s'il existe ou non des parties défectueuses ;
le premier processeur étant en outre configuré pour transférer les données vers le deuxième dispositif de stockage, s'il est déterminé qu'il n'existe pas de parties défectueuses provoquant une erreur de lecture, et le deuxième processeur étant configuré pour stocker les données transférées dans le deuxième dispositif de stockage ;
le premier processeur étant en outre configuré pour notifier le deuxième processeur qu'il existe une partie défectueuse provoquant une erreur de lecture et pour demander si la partie défectueuse doit ou non être modifiée, s'il est déterminé qu'il existe une partie défectueuse ;
le deuxième processeur étant en outre configuré pour envoyer une réponse d'utilisateur à la demande au premier processeur ;
le premier processeur étant configuré pour déterminer si la réponse indique ou non de modifier la partie défectueuse, et si c'est le cas, pour modifier la partie défectueuse en substituant la partie défectueuse par des données factices et pour transférer la partie modifiée au deuxième processeur pour stocker la partie modifiée dans le deuxième dispositif de stockage, et si ce n'est pas le cas, pour finaliser l'opération de copie ;
dans lequel les données factices constituent un motif binaire fixé ; et
dans lequel le premier dispositif de stockage est un disque dur, un disque optique, une mémoire flash ou une bande magnétique, et dans lequel le deuxième dispositif de stockage est un disque dur, un disque optique, une mémoire flash ou une bande magnétique.

4. Système selon la revendication 3, dans lequel le premier dispositif de stockage est compris dans un premier dispositif audio/vidéo et le deuxième dispositif de stockage est compris dans un deuxième dispositif audio/vidéo.
